# EUROPÄISCHE PATENTANMELDUNG

(11) **EP 1 070 946 A2**
(43) Veröffentlichungstag der Anmeldung: **24.01.2001**
(21) Anmeldenummer: 00810617.1
(22) Anmeldetag: 13.07.2000
(51) Int. Cl.: G01L 5/00, B21D 39/04

(54) **Vorrichtung zum Ueberprüfen der Presskraft eines hydraulischen Presswerkzeuges**

(30) Priorität: 20.07.1999 CH 132799
(71) Anmelder: GEBERIT TECHNIK AG, 8645 Jona (CH)
(72) Erfinder: Rüegg, Urs, 8640 Rapperswil (CH); Marti, Silvio, 8640 Rapperswil (CH)
(74) Vertreter: Groner, Manfred

(57) **Zusammenfassung**

Die Vorrichtung ist mit einem Druckraum (14) sowie Anzeigemitteln (24) versehen, welche mit dem Druckraum (14) verbunden sind. Der Druckraum (14) ist mit einem nachfolgenden Druckzylinder (29) mit einem darin geführten Anzeigekolben (19) verbunden. Der Anzeigekolben (19) wird zur Anzeige einer vorbestimmten minimalen Presskraft gegen eine Federkraft (23) bewegt. Vorzugsweise ist mit dem Anzeigekolben (19) ein Anzeigestift (24) verbunden, der beim Erreichen der minimalen Presskraft in eine sichtbare, vorstehende Stellung bewegt wird. Die Vorrichtung ermöglicht die einfache und sichere Überprüfung auf Erreichbarkeit der minimalen Presskraft.

## Beschreibung

Die Erfindung betrifft eine Vorrichtung zum Überprüfen der Presskraft eines hydraulischen Presswerkzeuges, insbesondere zum Verpressen von Rohrverbindungen, mit einem Druckraum sowie Anzeigemitteln, welche mit dem Druckraum verbunden sind.

Aus der DE 296 04 276 U1 ist ein Prüfgerät für die Überprüfung der Antriebskraft von Werkzeugantrieben, insbesondere von Presswerkzeugantrieben, bekannt geworden. Dieses Prüfgerät dient dazu, die Endkraft von Werkzeugantrieben zu überprüfen. Solche Antriebe dienen insbesondere dazu, Pressbacken für einen Pressvorgang radial nach innen zu bewegen, um beispielsweise einen hülsenförmigen Pressfitting zur Herstellung einer Rohrverbindung zusammenzupressen. Bei einem solchen Pressvorgang ist es wesentlich, dass jeweils eine vorbestimmte Endkraft erreicht wird. Wird eine solche Endkraft nicht erreicht, so ist die Qualität der Rohrverbindung und insbesondere ihre Dichtigkeit nicht gewährleistet. Nicht einwandfrei verpresste Rohrverbindungen können zu erheblichen Schäden führen. Das hier vorgeschlagene Prüfgerät ist mit einer Druckmesseinrichtung versehen, welche den Kraftverlauf beim Verpressen von Pressfittings simuliert. Ein Hydraulikkolben und Druckzylinder bilden einen Druckraum, der mit einem Druckmessgerät verbunden ist. Ein solches Prüfgerät ist sehr aufwendig.

Aus der EP 0 858 850 ist ein Presswerkzeug bekannt geworden, das eine elektronische Sicherheitseinheit mit mindestens einem Überwachungselement aufweist. Ein solches Überwachungselement ist insbesondere ein Öldruckmesselement. Ein weiteres Überwachungselement ist ein Temperaturfühler zur Bestimmung der Öltemperatur. Zur optischen Darstellung einer Fehlfunktion des Presswerkzeuges ist ein optisches Anzeigeelement vorgesehen. Auch diese Messvorrichtung ist vergleichsweise aufwendig.

Der Erfindung liegt die Aufgabe zugrunde, eine Vorrichtung der genannten Art zu schaffen, die eine Überprüfung der Endkraft von Werkzeugantrieben ermöglicht und die sicher und einfach zu handhaben und trotzdem kostengünstig herstellbar ist.

Die Aufgabe ist bei einer gattungsgemässen Vorrichtung dadurch gelöst, dass der Druckraum mit einem nachfolgenden Druckzylinder mit einem darin geführten Anzeigekolben verbunden ist, wobei der Anzeigekolben zur Anzeige einer vorbestimmten minimalen Presskraft gegen eine Federkraft bewegt wird. Bei der erfindungsgemässen Vorrichtung wird die notwendige Druckkraft mittels eines Anzeigekolbens überprüft und angezeigt. Bei Erreichen der vorbestimmten minimalen Presskraft wird der Anzeigekolben zur Anzeige dieser Presskraft gegen eine Federkraft bewegt. Die Bewegung eines solchen Anzeigekolbens kann mit sehr einfachen Mitteln, beispielsweise mit einem Anzeigestift, erfolgen. Die erfindungsgemässe Vorrichtung ist somit keine Messeinrichtung, sondern lediglich eine Anzeige, mit welcher überprüft werden kann, ob der Antrieb des hydraulischen Presswerkzeuges die erforderliche minimale Presskraft erreicht. Infolge ihres einfachen Aufbaus kann die erfindungsgemässe Vorrichtung als Zusatzgerät ausgebildet oder in ein Presswerkzeug integriert werden. Die Vorrichtung kann insbesondere anstelle einer Presszange am hydraulischen Antrieb befestigt werden. Der hydraulische Antrieb bewegt dann nach Erreichen der minimalen Presskraft den Anzeigekolben gegen die genannte Federkraft. Ist die Anzeige ein Anzeigestift, so wird dieser vorzugsweise von einer zurückgezogenen Position in eine vorstehende Position bewegt. Erreicht der Stift die vorstehende Position, so ist sichergestellt, dass mit dem Antrieb die erforderliche Endkraft erreicht werden kann. Die Vorrichtung wird dann wieder entfernt und die Presszange am Antrieb angebracht. Eine solche Überprüfung ist sehr einfach, schnell und sicher.

Sind nach einer Weiterbildung der Erfindung zwischen dem Druckraum und dem Druckzylinder Mittel zur Druckuntersetzung angeordnet, so können auch sehr hohe Presskräfte überprüft werden. Diese Mittel zur Druckuntersetzung weisen nach einer Weiterbildung der Erfindung ein Folgeventil auf. Dieses ist zwischen den beiden Druckräumen angeordnet und weist einen Durchgang mit einem vergleichsweise kleinen Durchmesser auf, an dem mittels der genannten Federkraft ein Ventilkörper anliegt. Ist die Kraft auf den Ventilkörper grösser als die Federkraft, so wird der Anzeigekolben bewegt. Unterhalb dieser Presskraft erfolgt keine Bewegung des Anzeigekolbens und entsprechend erfolgt auch keine Anzeige.

Die Erfindung betrifft auch ein Verfahren zum Betrieb einer solchen Vorrichtung.

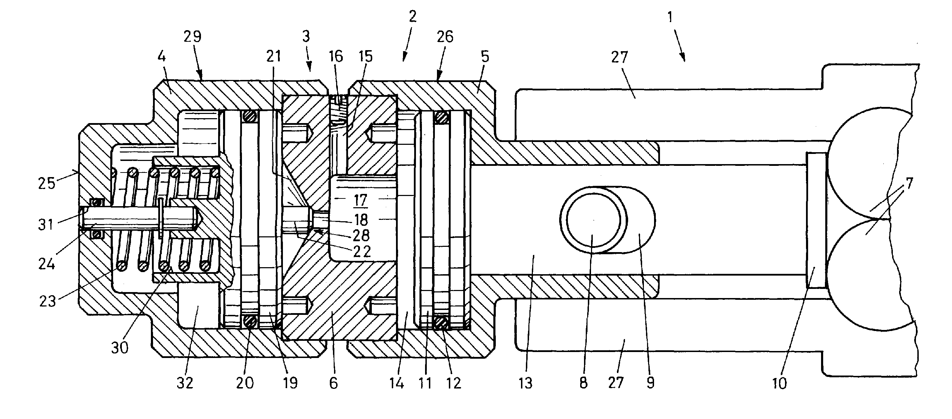

Weitere vorteilhafte Merkmale ergeben sich aus den abhängigen Patentansprüchen, der nachfolgenden Beschreibung sowie der Zeichnung.

Die Erfindung wird nachfolgend anhand einer einzigen Figur erläutert. Die Figur zeigt einen Längsschnitt durch eine erfindungsgemässe Vorrichtung.

Die einzige Figur zeigt schematisch das vordere Ende eines hydraulischen Werkzeugantriebes 1. Dieser Antrieb 1 weist zwei parallele Wangen 27 auf, an denen mittels eines Bolzens 8 die Prüfvorrichtung 2 befestigt ist. Die Prüfvorrichtung 2 weist ein Gehäuse 3 auf, das aus zwei Gehäuseteilen 4 und 5 sowie einem diese verbindenden Körper 6 besteht. Dieses Gehäuse 3 ist mittels des Bolzens 8 fest mit den beiden Wangen 27 verbunden. Der Antrieb 1 weist in bekannter Weise zwei Rollen 7 auf, die in der Figur von rechts nach links bewegt werden und die an einer Platte 10 einer Kolbenstange 13 anliegen. Damit die Kolbenstange 13 mit dem Kolben 11 von rechts nach links bewegt werden kann, weist die Kolbenstange 13 ein Langloch 9 auf.

Die Prüfvorrichtung 2 ist hier anstelle eines hier nicht gezeigten Presswerkzeuges, insbesondere einer Presszange, am Antrieb 1 befestigt. Beim Verpressen beispielsweise einer Rohrverbindung ist an den beiden Wangen 27 mit dem Bolzen 8 somit eine Presszange angebracht. Mit den beiden Rollen 7 werden die Antriebsarme der beiden Pressarme verschwenkt. Eine solche Presszange ist in den oben genannten Druckschriften offenbart und dem Fachmann auch sonst gut bekannt.

Der Gehäuseteil 5 bildet mit dem Kolben 11 und dem Körper 6 einen Druckzylinder 26 mit einem Druckraum 14, der mit Hydrauliköl gefüllt ist. Die Abdichtung des Kolbens 11 gegenüber dem Gehäuseteil 5 erfolgt mittels eines Dichtungsringes 12. Ein Gewindestift 16 ermöglicht das Auswechseln und Nachfüllen von Hydrauliköl.

In den Körper 6 ist eine zylindrische Ausnehmung 17 eingearbeitet, die mit dem Druckraum 14 sowie mit einem Durchgang 18 verbunden ist. An der Ausgangsseite dieses Durchganges 18 ist in den Körper 6 eine weitere sich konisch erweiternde Ausnehmung 21 eingearbeitet, die einen Ventilsitz bildet. In diese Ausnehmung 21 greift ein Ventilkörper 22 ein und verschliesst diesen Durchgang 18 ausgangsseitig. Der Ventilkörper 22 und der Durchgang 18 bilden ein Folgeventil 28.

Im Gehäuseteil 4 ist ein Anzeigekolben 19 geführt, an dem rückseitig der genannte stiftförmige Ventilkörper 22 fest angebracht ist. Das Gehäuseteil 4 bildet mit dem Anzeigekolben 19 einen weiteren Druckzylinder 29. Die Abdichtung des Kolbens 19 gegenüber dem Gehäuseteil 4 erfolgt mittels eines Dichtungsringes 20. Im Druckraum 32 des Druckzylinders 29 befindet sich eine vorgespannte, hier lediglich angedeutete, Spiralfeder 23, welche den Ventilkörper 22 in der Ausnehmung 21 am Körper 6 anpresst und damit den Durchgang 18 verschliesst. Die Feder 23 ist somit eine Druckfeder und einenends am Gehäuseteil 4 und anderenends in einer ringförmigen Ausnehmung 30 am Anzeigekolben 19 abgestützt.

Am Anzeigekolben 19 ist ein Anzeigestift 24 befestigt, der an seinem vorderen Ende in einer mittigen Bohrung 31 des Gehäuseteils 4 verschieblich geführt ist. In der gezeigten Stellung ist der Anzeigestift 24 frontseitig mit einer Stirnseite 25 des Gehäuseteils 4 bündig.

Nachfolgend wird die Arbeitsweise der Vorrichtung 2 näher erläutert.

Wird der Antrieb 1 in Betrieb gesetzt, so bewegen sich die beiden Rollen 7 in der Figur von rechts nach links. Entsprechend wird der Kolben 11 nach links bewegt. Durch diese Bewegung des Kolbens 4 wird im Druckraum 14 ein Druck aufgebaut. Dieser Druck soll beispielsweise 135 Bar erreichen. Dies ist beispielsweise ein Druck, der erreicht werden muss, um mittels einer Presszange den minimal erforderlichen Pressdruck zu erreichen. Bei diesem Druck beträgt die Kraft der beiden Rollen 7 etwa 26'500 Newton. Die Kraft auf den Ventilkörper 22 beträgt hierbei etwa 122 Newton. Die Kraftuntersetzung ist eine Folge des wesentlich kleineren Querschnittes des Durchganges 18 verglichen mit der wirksamen Fläche des Kolbens 11.

Die Kraft der Feder 23 ist nun so eingestellt, dass bis zum Erreichen einer minimalen Presskraft der Ventilkörper 22 den Durchgang 18 verschliesst. Beispielsweise wird somit bei einer Kraft von 122 Newton auf den Ventilkörper 22 dieser aus der gezeichneten Position nicht bewegt. Wird hingegen diese Kraft überschritten, so vermag die Druckfeder 23 den Ventilkörper 22 nicht mehr in der gezeigten Position zu halten und der Ventilkörper 22 wird mit dem Kolben 19 in der Figur von rechts nach links bewegt. Nach dem Anheben des Ventilkörpers 22 strömt Hydrauliköl durch den Durchgang 18 in die Ausnehmung 21 und den sich bildenden Raum zwischen dem Körper 6 und dem Kolben 19. Damit wird die Kraft auf den Körper 19 stark erhöht und der Kolben 19 bewegt sich nun nach links bis zum Anschlag am Gehäuseteil 4. Durch die Bewegung des Kolbens 19 wird auch der Anzeigestift 24 in der Figur nach links bewegt und überragt damit optisch deutlich sichtbar die Stirnfläche 25. Damit ist deutlich angezeigt, dass der Antrieb 1 die erforderliche minimale Presskraft erreicht. Die Vorrichtung 2 kann nun nach dem Zurückfahren der Rollen 7 durch Herausziehen des Bolzens 8 vom Antrieb wieder abgenommen und durch eine Presszange oder ein anderes Werkzeug ersetzt werden. Nach einer gewissen Benutzungszeit wird die Vorrichtung 2 wieder am Antrieb 1 befestigt und dieser wie erläutert überprüft.

Die Vorrichtung 2 ist hier ein Zusatzgerät. Denkbar ist jedoch auch eine Ausführung, bei welcher die Vorrichtung in den Antrieb 1 integriert ist. Der Kolben 11 ist dann nicht erforderlich, wenn der Druckraum 14 durch den Druckraum des Antriebes 1 gebildet wird. Das Folgeventil 28, der Anzeigekolben 19, die Druckfeder 23 sowie das Anzeigeelement 24 sind dann in den Antrieb 1 integriert. Bei jedem Pressvorgang zeigt dann ein vorstehender Anzeigestift 24 das Erreichen der minimalen Presskraft an.

## Patentansprüche

1. Vorrichtung zum Überprüfen der Presskraft eines hydraulischen Presswerkzeuges (1), mit einem Druckraum (14) sowie Anzeigemitteln (24), welche mit dem Druckraum (14) verbunden sind, dadurch gekennzeichnet, dass der Druckraum (14) mit einem nachfolgenden Druckzylinder (29) mit einem darin geführten Anzeigekolben (19) verbunden ist, wobei der Anzeigekolben (19) zur Anzeige einer vorbestimmten minimalen Presskraft gegen eine Federkraft (23) bewegt wird.

2. Vorrichtung nach Anspruch 1, dadurch gekennzeichnet, dass mit dem Anzeigekolben (19) ein Anzeigestift (24) verbunden ist, der beim Erreichen der minimalen Presskraft in eine sichtbare, vorstehende Stellung bewegt wird.

3. Vorrichtung nach Anspruch 1 oder 2, dadurch gekennzeichnet, dass zwischen dem Druckraum (14) und dem Druckzylinder (29) Mittel (28) zur Druckuntersetzung angeordnet sind.

4. Vorrichtung nach Anspruch 3, dadurch gekennzeichnet, dass die Mittel (28) zur Druckuntersetzung ein Folgeventil aufweisen.

5. Vorrichtung nach einem der Ansprüche 1 bis 4, dadurch gekennzeichnet, dass die Federkraft verstellbar ist.

6. Vorrichtung nach Anspruch 5, dadurch gekennzeichnet, dass die Federkraft von einer vorgespannten Druckfeder (23) erzeugt wird.

7. Vorrichtung nach einem der Ansprüche 1 bis 6, dadurch gekennzeichnet, dass der Druckraum (14) durch einen weiteren Druckzylinder (26) mit einem Hydraulikkolben (11) gebildet ist.

8. Vorrichtung nach Anspruch 7, dadurch gekennzeichnet, dass zwischen den beiden Druckzylindern (26, 29) ein Körper (6) mit einem Durchgang (18) angeordnet ist, dessen Querschnitt kleiner ist als die wirksame Fläche des Hydraulikkolbens (11) des weiteren Druckzylinders (26).

9. Vorrichtung nach einem der Ansprüche 1 bis 6, dadurch gekennzeichnet, dass der genannte Druckraum (14) der Druckraum eines hydraulischen Antriebes (1) ist.

10. Verfahren zum Betrieb einer Vorrichtung nach Anspruch 1, wobei die Vorrichtung anstelle einer Presszange an einem hydraulischen Antrieb (1) anzuschliessen ist oder in diesem Antrieb (1) integriert ist, dadurch gekennzeichnet, dass der Antrieb in Betrieb genommen und in einem ersten Druckraum ein Druck aufgebaut wird und dass beim Erreichen eines vorbestimmten Druckes in diesem Druckraum ein Anzeigekolben geführt verschoben wird.
